## Europäisches Patentamt
## European Patent Office
## Office européen des brevets

(11) Veröffentlichungsnummer: **0 230 924**
**A2**

(12) **EUROPÄISCHE PATENTANMELDUNG**

(21) Anmeldenummer: **87100510.4**

(22) Anmeldetag: **16.01.87**

(51) Int. Cl.4: **H04N 5/14**

(30) Priorität: **29.01.86 DE 3602529**

(43) Veröffentlichungstag der Anmeldung:
**05.08.87 Patentblatt 87/32**

(84) Benannte Vertragsstaaten:
**DE FR IT SE**

(71) Anmelder: **Blaupunkt-Werke GmbH**
**Robert-Bosch-Strasse 200**
**D-3200 Hildesheim(DE)**

(72) Erfinder: **Gronau, Gerald**
**Willi-Plappert-Strasse 18**
**D-3200 Hildesheim(DE)**
Erfinder: **Hinkel, Lukas**
**Meerbrink 12**
**D-3204 Nordstemmen(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Schaltungsanordnung zur Regelung des Arbeitspunktes von breitbandigen Videoendstufen.**

(57) Bei einer Schaltungsanordnung zur Regelung des Arbeitspunktes von breitbandigen Videoendstufen ist eine dem Kathodenstrahl entsprechende Spannung einem Videoprozessor, welcher mindestens eine Sperrpunktregelschaltung und andere Schaltungen enthält, zuführbar. Das Ausgangssignal der Sperrpunktregelschaltung ist einem der breitbandigen Videoendstufe zugefuhrten Videosignal uberlagert. Bei Farbsichtgeräten sind drei breitbandige Videoendstufen und drei Sperrpunktregelschaltungen vorgesehen.

EP 0 230 924 A2

## Schaltungsanordnung zur Regelung des Arbeitspunktes von breitbandigen Videoendstufen

Die Erfindung geht aus von einer Schaltungsanordnung nach der Gattung des Hauptanspruchs.

Für Farbfernsehgeräte sind Schaltungsanordnungen zur Regelung des Arbeitspunktes der Videoendstufen bekannt, bei welchen eine dem Strahlstrom entsprechende Spannung während einer Zeile innerhalb des vertikalfrequenten Austastintervalls nach dem Strahlrücklauf mit einer Vergleichsspannung verglichen wird und das Ergebnis des Vergleichs während des darauf folgenden Halbbildes gespeichert wird. In Abhängigkeit von der gespeicherten Spannung erfolgt eine Einstellung des Arbeitspunktes der Videoendstufe. Derartige Schaltungen, auch Sperrpunktregelung oder Cut-off-Automatik genannt, werden zusammen mit einer Reihe anderer Schaltungen, unter anderem Videoverstärkern, als integrierte Bausteine angeboten. Diese integrierten Bausteine sind jedoch wegen der geringen Bandbreite der in ihnen enthaltenen Videoverstär ker nicht für hochauflösende Datensichtgeräte und Monitore geeignet.

Die erfindungsgemäße Schaltungsanordnung mit den kennzeichnenden Merkmalen des Hauptanspruchs hat demgegenüber den Vorteil, daß eine Ausbildung der Videoverstärker entsprechend den Erfordernissen von hochauflösenden Sichtgeräten möglich ist und dennoch die preiswerten in den obengenannten integrierten Bausteinen enthaltenen Regelschaltungen genutzt werden können.

Durch die in den Unteransprüchen aufgeführten Maßnahmen sind vorteilhafte Weiterbildungen und Verbesserungen der im Hauptanspruch angegebenen Erfindung möglich.

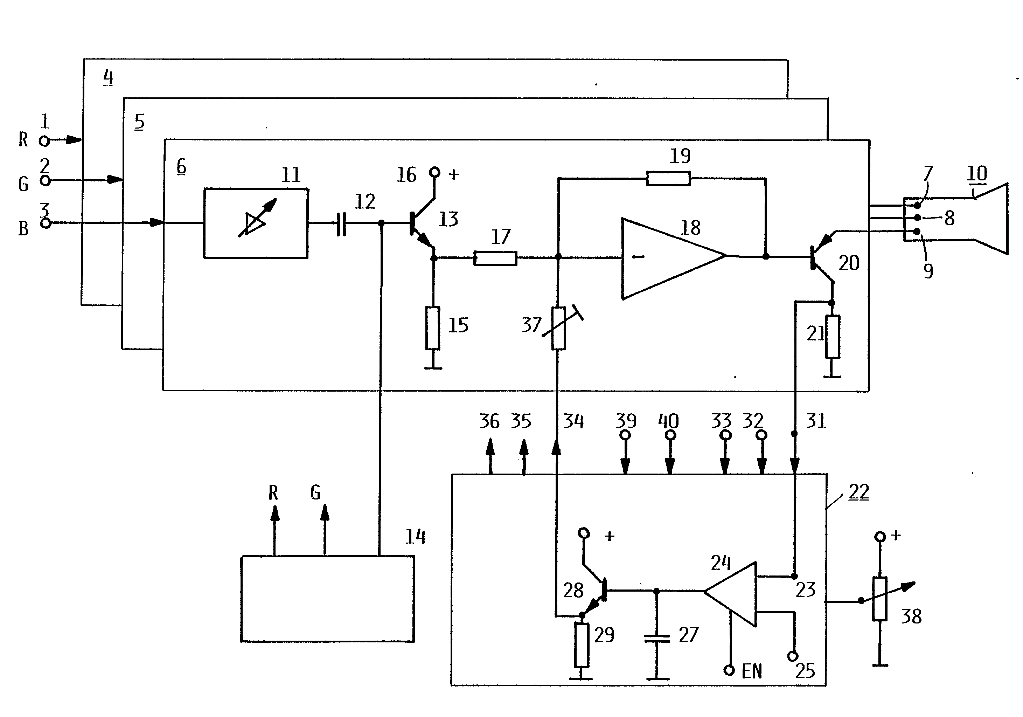

Ein Ausführungsbeispiel der Erfindung ist in der Zeichnung dargestellt und in der nachfolgenden Beschreibung näher erläutert.

Über die Eingänge 1, 2, 3 der dargestellten Schaltungsanordnung werden die Farbwertsignale R, G, B den Videoverstärkern 4, 5, 6 zugeführt, deren Ausgänge mit je einer Kathode 7, 8, 9 einer Farbbildröhre 10 verbunden sind.

Da die Verstärker 4, 5, 6 gleichartig aufgebaut sind, ist lediglich der Verstärker 6 genauer dargestellt. Vom Eingang 3 gelangt das Farbwertsignal zu einem Videovorverstärker, welcher unter anderem mit Hilfe einer einstellbaren Verstärkung eine Kontrasteinstellung ermöglicht. Der Ausgang des Videovorverstärkers 11 ist über einen Kondensator 12 mit der Basis eines als Emitterfolger geschalteten Transi stors 13 verbunden. In einer Klemmschaltung 14 wird periodisch während des zeilenfrequenten Rücklaufs die Basis des Transistors 13 mit konstantem Potential verbunden, wodurch die Videosignale in an sich bekannter Weise einen konstanten Gleichspannungswert erhalten. Die Klemmschaltung 14 ist in gleicher Weise mit den Videoverstärkern 4 und 5 verbunden.

Der Emitter des Transistors 13 ist über den Arbeitswiderstand 15 mit Massepotential verbunden, während der Kollektor des Transistors 13 an einen positiven Pol 16 einer Betriebsspannungsquelle angeschlossen ist. Über einen Koppelwiderstand 17 wird das Farbwertsignal zum Eingang eines invertierenden Verstärkers 18 geführt, dessen Leerlaufverstärkung derart hoch ist, daß die effektive Verstärkung etwa dem Verhältnis zwischen dem Gegenkopplungswiderstand 19 und dem Koppelwiderstand 17 entspricht. Am Ausgang des Verstärkers 18 haben die Videosignale bereits eine zur Ansteuerung der Bildröhre ausreichende Amplitude. Sie werden über einen als Emitterfolger geschalteten Ausgangstransistor 20 zur Kathode 9 der Farbbildröhre 10 geleitet.

An einem zwischen den Kollektor des Ausgangstransistors 20 und Massepotential geschalteten Widerstand 21 ist eine Spannung abnehmbar, welche proportional zum Strahlstrom ist. Diese wird in an sich bekannter Weise in einem als integrierte Schaltung ausgeführten Videoprozessor 22 zur Regelung des Arbeitspunktes des Videoverstärkers 18, 20 ausgewertet. Derartige Videoprozessoren sind beispielsweise unter der Typenbezeichnung TDA 3301 erhältlich.

Da derartige Videoprozessoren sowie die darin enthaltene Sperrpunktregelschaltung bekannt sind, wird im folgenden nur kurz darauf eingegangen, wobei die innerhalb des Videoprozessors 22 dargestellten Schaltungseinzelheiten lediglich einen kleinen Teil des Videoprozessors darstellen. Die vom Widerstand 21 abgenommene Spannung wird einem Eingang 23 eines Differenzverstärkers 24 zugeführt, an dessen anderem Eingang 25 eine Bezugsspannung liegt.

Der Differenzverstärker 24 ist ein schaltbarer Operationsverstärker, dessen Ausgang 26 nur ein Signal abgibt, wenn an einem Schalteingang EN ein entsprechendes Signal ansteht. Während der übrigen Zeit ist der Ausgang 26 hochohmig geschaltet. Dem Schalteingang EN wird nun ein Impuls zugeführt, der einer aktiven Zeile innerhalb des vertikalfrequenten Austastintervalls nach dem Strahlrücklauf entspricht. Während dieser Zeit wird also das Ergebnis der Differenzbildung zwischen der dem Strahlstrom entsprechenden Spannung und einer Bezugsspannung vom Differenzverstärker 24 abgegeben und ein Kondensator 27 auf diesen Wert aufgeladen. Der schaltbare Differenzverstärker 24 und der Kondensator 27 bilden somit eine Abtast-und Halteschaltung (Sample and Hold).

Die am Kondensator 27 anstehende Spannung wird der Basis eines Transistors 28 zugeführt, welcher zusammen mit dem Widerstand 29 als Impedanzwandler geschaltet ist. Dabei bildet die Basis des Transistors 28 einen hochohmigen Eingang, so daß die Ladung des Kondensators 27 während einer Halbbildperiode praktisch konstant bleibt.

Die Sperrpunktregelschaltung ist dreifach vorhanden, jeweils für eines der Farbwertsignale R, G, B. Außer dem Eingang 31 für die dem Strahlstrom der Kathode 9 entsprechende Spannung sind für die Kanäle R und G Eingänge 32 und 33 vorgesehen. Über Ausgänge 34, 35 und 36 des Videoprozessors werden Spannungen zur Steuerung des Arbeitspunktes den jeweiligen Videoverstärkern zugeführt. Im Videoverstärker 6 gelangt die Steuerspannung über einen einstellbaren Widerstand 37 an den Eingang des invertierenden Verstärkers 18. Mit Hilfe der Veränderung des Widerstandes 37 kann die Verstärkung des durch den Videoprozessor und den Videoverstärker gebildeten Regelkreises eingestellt werden, ohne daß die Verstärkung für das vom Transistor 13 zugeführte Videosignal verändert wird.

Der Videoprozessor enthält ferner Schaltungsanordnungen zur Helligkeitseinstellung sowie zur Rucklaufaustastung, welche für die erfindungsgemäße Schaltungsanordnung ebenfalls genutzt werden. Zur Helligkeitseinstellung wird dem Videoprozessor 22 eine mit Hilfe des Potentiometers 38 einstellbare Spannung (Helligkeitsspannung) zugeführt. Die Helligkeitsspannung kann sowohl positiv als auch negativ sein und wird im Videoprozessor 22 den Ausgangsspannungen der Sperrpunktregelschaltungen während des Zeilenhinlaufs hinzuaddiert. Während des Bildrücklaufs und während der oben beschriebenen Strahlstrommessung erfolgt keine Addition der Helligkeitsspannung.

Um Verfälschungen der Farbtemperatur bei Helligkeitsänderungen als Folge unterschiedlicher Steigungen der Bildröhrenkennlinien zu vermeiden, ist die Verstärkung für die Ausgangssignale des Videoprozessors 22 mit Hilfe des Widerstandes 37 einstellbar. Da durch, daß die Helligkeit der drei Farben über einen Steuereingang des Videoprozessors 22 mit Hilfe einer Gleichspannung eingestellt werden kann, ist beispielsweise auch eine Ansteuerung durch einen mit dem Sichtgerät verbundenen Computer möglich. Zur zeitlichen Steuerung des Videoprozessors 22 werden bei 39 und 40 jeweils ein sogenannter Sandcastle-Impuls und ein vertikalfrequenter Austastimpuls zugefuhrt.

**Ansprüche**

1. Schaltungsanordnung zur Regelung des Arbeitspunktes von breitbandigen Videoendstufen, dadurch gekennzeichnet, daß eine dem Kathodenstrahl entsprechende Spannung einem Videoprozessor (22), welcher mindestens eine Sperrpunktregelschaltung (23 bis 30) und andere Schaltungen enthält, zuführbar ist und daß das Ausgangssignal der Sperrpunktregelschaltung einem der breitbandigen Videoendstufe (18, 20) zugeführten Videosignal überlagert ist.

2. Schaltungsanordnung nach Anspruch 1, dadurch gekennzeichnet, daß drei breitbandige Videoendstufen (18, 20) und drei Sperrpunktregelschaltungen vorgesehen sind.

3. Schaltungsanordnung nach Anspruch 2, dadurch gekennzeichnet, daß die Sperrpunktregelschaltungen jeweils eine Abtast-und Halteschaltung (24, 27) umfassen, welche eine der Abweichung des Strahlstroms von einem Sollwert entsprechende Spannung während des vertikalfrequenten Austastintervalls nach dem Strahlrücklauf abtastet.

4. Schaltungsanordnung nach Anspruch 1, dadurch gekennzeichnet, daß dem Videoprozessor (22) eine Gleichspannung zur Einstellung der Helligkeit zuführbar ist.

5. Schaltungsanordnung nach Anspruch 2, dadurch gekennzeichnet, daß zwischen die Ausgänge der Sperrpunktregelschaltungen und die Eingänge der breitbandigen Videoendstufen (18, 20) jeweils ein einstellbarer Widerstand (37) geschaltet ist.

R.-Nr. 1903

0 230 924